# EUROPEAN PATENT SPECIFICATION

(11) **EP 0 685 011 B1**
(45) Date of publication and mention of the grant of the patent: **26.03.1997**
(21) Application number: 95902793.9
(22) Date of filing: 12.12.1994
(51) Int. Cl.: D06F 37/20, F16F 7/09

(54) **SHOCK ABSORBER FOR WASHING MACHINES, IN PARTICULAR HOUSEHOLD CLOTHES WASHING MACHINES**
DÄMPFER FÜR WASCHMASCHINEN, INSBESONDERE FÜR HAUSHALTWÄSCHEWASCHMASCHINEN
AMORTISSEUR POUR MACHINES A LAVER, EN PARTICULIER MACHINES A LAVER LE LINGE MENAGERES

(30) Priority: 16.12.1993 IT BL930029
(43) Date of publication of application: 06.12.1995
(73) Proprietor: R.& D.S. S.r.l., I-33084 Cordenons, Pordenone (PN) (IT)
(72) Inventor: FORNASARI, Luca, I-33084 Cordenons (IT)
(74) Representative: Dalla Rosa, Adriano
(86) International application number: EP9404121
(87) International publication number: WO9516813

(56) References cited:
- DE-A- 3 908 191
- DE-A- 4 014 166
- FR-A- 1 088 217

## Description

The invention relates to a shock absorber for washing machines, and in particular for clothes washing machines, adapted to support the units drumtub of such machines and to dampen effectively the mechanical stresses produced during the operation of the machines referred to.

Different kinds of shock absorbers for washing machines and in particular household clothes washing machines are known, adapted to support and dampen the mechanical stresses of the associated washing units (tub and drum) of such machines during operation thereof, and connected between the lower portion of each washing unit and the lower base of the same machines. These shock absorbers such as e.g described in DE-A-3 908 191 are generally formed by a hollow cylinder and a cylindric rod reciprocatingly slidable inside such cylinder, which rod is provided with braking surfaces made of suitable material, co-operating with the inner surface of the cylinder, and which during operation of the respective machine moves linearly and reciprocatingly inside the cylinder, due to the movements of the washing unit which are caused by the rotation of the drum at its different washing and centrifugating speeds, thereby producing a braking action adapted to dampen the generated mechanical stresses.

These kinds of shock absorbers, which are generally made of metallic materials or sometimes also with component parts made of plastics, however, have some inconveniences above all when they must be fitted on clothes washing machines, whose drum is rotated with too high centrifugation speeds (higher than 1000 rpm), in which conditions there are produced high mechanical stresses by the washing unit on the machine structure. In fact, in such cases it has been found that on each shock absorber the rod slidable with a reciprocatingly rectilinear movement inside the cylinder moves during its stroke also radially therein, so that the braking surfaces of such rod do not more exert braking actions distributed almost evenly on the entire cylinder inner surface, rather they exert irregular and variable braking actions on such inner surface, which tend to concentrate at pre-established positions of the same inner surface, thereby causing both premature and undesired wears and therefore a shorter life duration of each shock absorber and unsatisfying braking actions for the mechanical stresses of the washing unit.

The present invention has the main object to eliminate the inconveniences associated to the use of the present shock absorbers, by means of a shock absorber of new kind adapted to ensure effective braking actions distributed almost evenly on the same shock absorber, at any operative state of the clothes washing machines, which is composed of simple component parts which can be assembled rapidly together and is able to operate for long life durations in a satisfying and reliable way.

The shock absorber according to the invention is made with the constructive characteristics substantially described with particular reference to the accompanying patent claims.

The invention will be better understood by the following description, given solely by way of not limiting example, with reference to the enclosed drawings, wherein :
- Fig. 1 shows schematically a washing machine provided with at least a shock absorber according to the invention,
- Figs. 2, 3 and 4 show, in respective front, side and exploded perspective views, a shock absorber according to the invention,
- Fig. 5 shows schematically in a side view the two main component parts of the present shock absorber, inserted the one in the other one,
- Figs. 6 and 7 show schematically in a front and side view the two main component parts of Fig. 5, extracted the one from another,
- Figs. 8, 9 and 10 show in plan views cut respectively along the lines A-A, B-B and C-C the shock absorber shown by Fig. 5,
- Fig. 11 a, b, c shows a diagram of distribution of braking actions in a conventional shock absorber,
- Fig. 12 a, b, c shows a diagram of distribution of braking actions in the present shock absorber,
- Fig. 13 shows in a front view another component part of the shock absorber according to the invention,
- Figs. 14 and 15 show the component part of Fig. 13 respectively cuts along the lines D-D and E-E,
- Fig. 16 shows in a front view another component part of the shock absorber according to the invention,
- Fig. 17 shows the component part of Fig. 16 cuts along the line F-F.

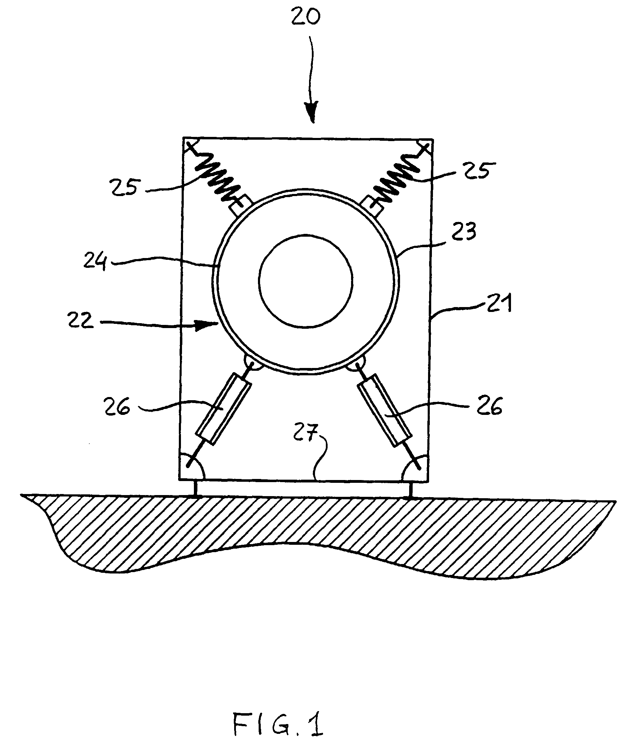

In Fig. 1 is represented schematically a washing machine, in particular a household clothes washing machine, marked with the reference numeral 20, comprising substantially a metallic box-like housing 21 in which a washing unit 22, formed by a washing tub 23 and a rotating drum 24 for containing the clothes, housed into the tub, is supported by means of upper suspension springs 25 and lower shock absorbers 26, fixed between the lower portion of the tub 23 and the lower base 27 of the machine housing, and provided for dampening the mechanical stresses caused by the washing unit swingings during drum operation at its washing and centrifugating speeds.

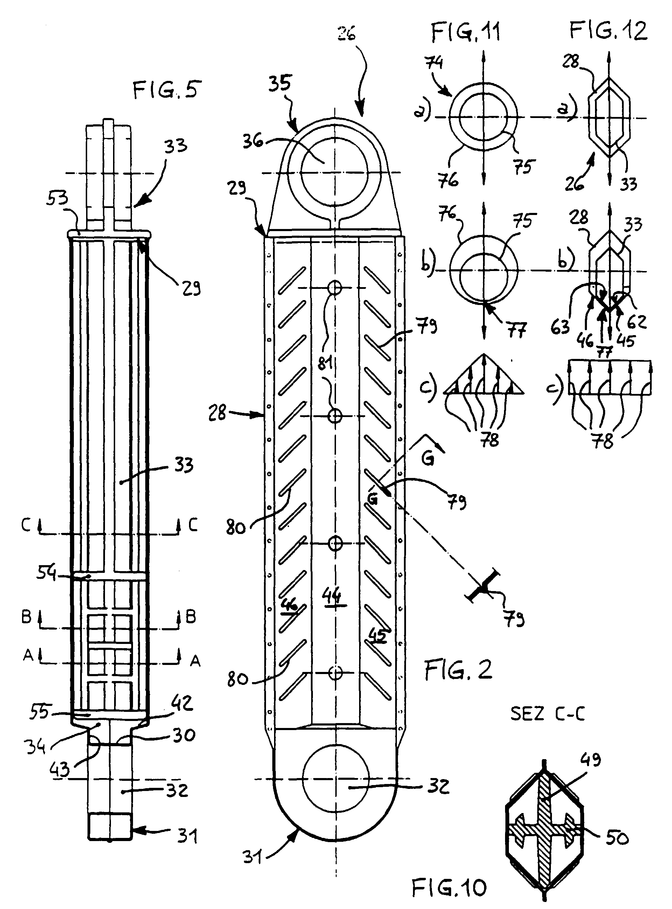

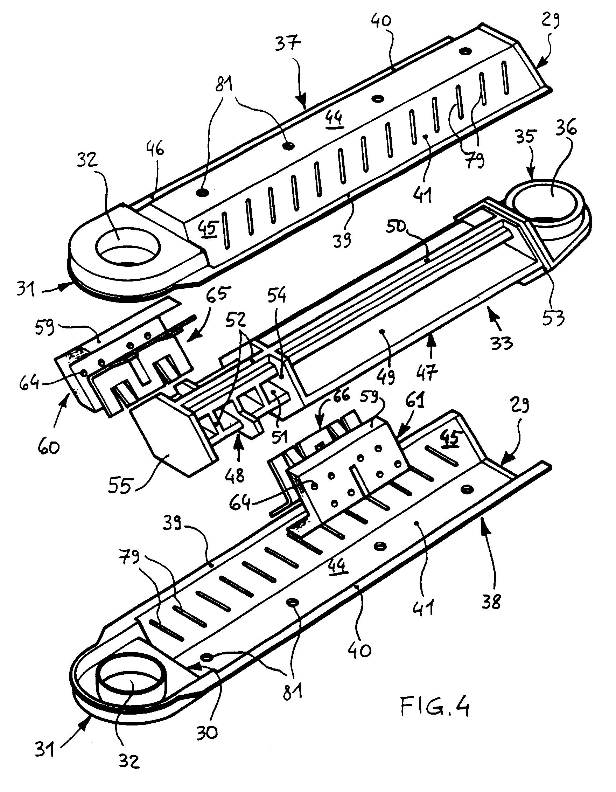

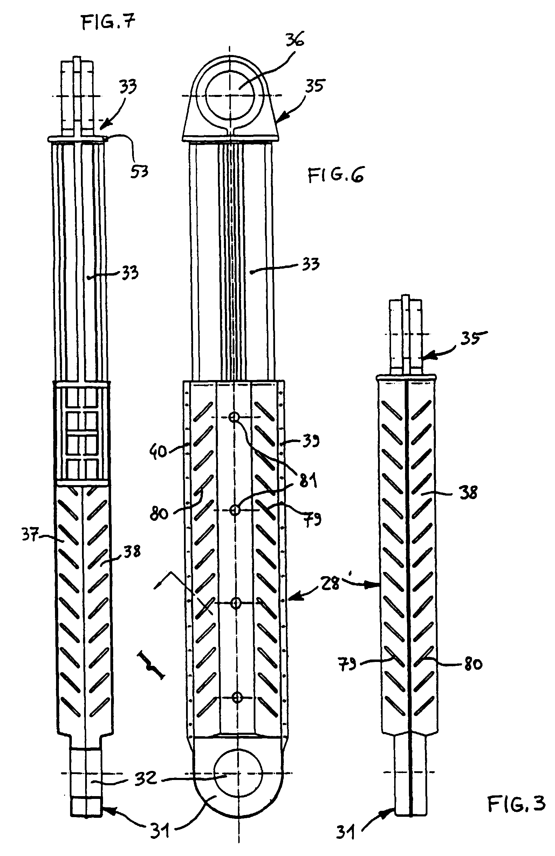

In Figs. 2-7 is shown now schematically the one of the shock absorbers 26 according to the invention, which is constituted substantially by two main component parts, namely a metallic tubular housing 28 having elongated shape, which is internally hollow and provided respectively with an opened end portion 29 and a closed bottom portion 30, which is joined to an end zone 31 provided with a through hole 32 in which a rubber bush and thereafter a stud (both not shown) are inserted, for the articulated and vibration-damped connection thereof to the machine base 27, and by an elongated rectilinear rod 33 made of plastic material, which is so dimensioned as to be able to be inserted and adapted in the inner cavity 34 of the tubular housing 28, in such a way that to slide reciprocatingly and rectilinearly therein, the outer end zone 35 of which is provided with a through hole 36, opposite to the hole 32 of the tubular housing 28, and in which there are inserted firstly a rubber bush and then a stud (both not shown) for the articulated and vibration-damped connection thereof to the lower portion of the machine tub.

As particularly evident from Figs. 2, 3, 4 and 8-10, the metallic tubular housing 28 is constituted by two half-shells 37 and 38 identical and symmetrical to each other, each one of which is shaped in the manner hereinafter described and is obtained by drawing and shearing processings of correspondent metallic sheet parts and are respectively provided with two rectilinear flattened edges 39 and 40, opposite to each other, adapted to be reciprocally aligned and overlapped and finally joined by means of resistance welding or per se known means.

In particular, each half-shell is formed by an elongated rectilinear casing 41 having a polygonal shaped outline, with sides of equal or different sizes, which extends from the opened end portion 29 up to near the closed bottom portion 30, joined to the end zone 31, to which such rectilinear casing 41 is joined with a set of tapered steps 42 and 43.

In the present embodiment, each half-shell is shaped with a rhombus formed outer outline and is provided with a central flat side 44 and two adjacent flat and inclined sides 45 and 46, having almost the same size of the central side and inclinations symmetrically opposite to each other and directed from the correspondent edge of such central side 44 toward the longitudinal axis of symmetry A-A passing centrally in the tubular housing 28. Obviously, the shape and sides of the rectilinear casing 41 of each half-shell 37 and 38 may vary with respect to the present embodiment, provided that there are always obtained flat sides which are able to perform the functions of damping the oscillations of the washing unit of the washing machines with the criteria hereinafter described. In turn, the elongated rectilinear rod 33 is preferably integrally made of molded plastic material and is constituted by two ribbed portions 47 and 48 joined together and shaped with an outer outline identical and having sizes slightly lesser than those of the inner cavity 34 of the tubular housing 28, in order to be able to be adapted and to slide rectilinearly and reciprocatingly in the same housing, wherein said portions are provided with respective longitudinal rectilinear ribs 49, 50 and 51, 52, joined orthogonally thereamong and extended respectively a long the larger portion and the smaller one of the cross section of the tubular housing 28, said ribs being delimited at their ends by plates 53, 54 and 55 having the same outline of said inner cavity 34, the plate 53 of which is larger than such inner cavity and is joined to the outer end zone 35 of the rod 33, and the plates 54 and 55 are slightly smaller than such inner cavity, in order to be able to slide therein, and are arranged respectively on a position interposed between the ribbed portions 47 and 48 and an end position of the rod 33, opposite to that where the plate 53 is situated.

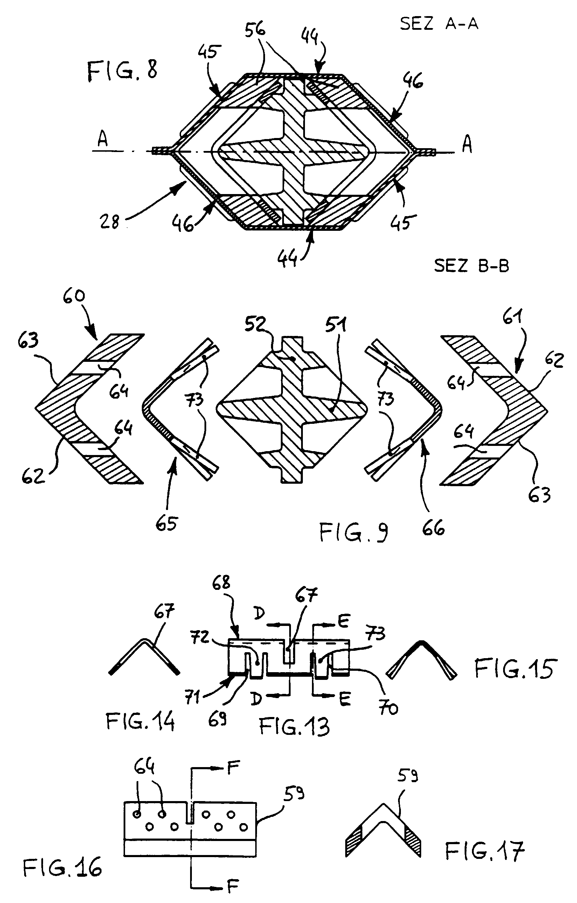

In this way, when the rod 33 is inserted or extracted with respect to the inner cavity 34 of the tubular housing 28, as evident from Figs. 5, 6 and 7, the plates 54 and 55 are exactly matched inside such tubular housing, while on the contrary the plate 53 by abutting the free edge of said tubular housing prevents said rod from being fully inserted into the same tubular housing.

Moreover, the ribbed portion 48, which is shorter than the remaining portion 47 of the elongated rectilinear rod 33, has the ribs dimensioned in such a way that to permit to house externally at least a friction pad 56 made of adequate antifriction material, adapted to exert a braking action by rubbing against the surface of the inner cavity 34 of the tubular housing 28, during the reciprocating movement of the rod 33 inside such tubular housing, caused by the oscillations of the tub-drum unit on the operation of each machine, with consequent dampening of the mechanical stresses produced by such oscillations. In particular, the friction pad is made with separated component parts each shaped like an elongated plate 59, provided with flat sides having the same outline and sizes slightly larger than the inner cavity 34 of the tubular housing 28, in order to permit such component parts to be adapted and to slide into said inner cavity.

In the present case, the friction pad comprises two component parts 60 and 61, each one of which provided with two equal sides 62 and 63, inclined symmetrically for the entire extent thereof, having the same inclination of the correspondent adjacent sides 45 and 46 of the two half-shells 37 and 38 of the tubular housing 28. These friction pad elongated plates, evident in detail also from Figs. 16 and 17, respectively in a front and a cut plan views, are provided with a plurality of through holes 64 distributed evenly on the surface thereof, so as to ensure the passage of the grease and other suitable lubricating materials therethrough, which are adapted to keep all the shock absorber component parts always lubricated during the operative cycles thereof, and which are housed externally against the rectilinear ribs 51, 52 of the ribbed portion 48 of the elongated rod 33, with the interposition of resilient elements shaped as two metallic flat springs 65 and 66, particularly evident from the Figs. 4, 8-10, each one of which is so dimensioned and shaped as to be adapted with one surface thereof against the respective friction pad elongated plate and with the opposite surface thereof against the outer outline of the rectilinear ribs 51, 52 of said ribbed portion 48.

Each metallic flat spring, in particular, is so shaped as to have one or more slots for the passage of grease or other suitable lubricating materials to keep the different shock absorber component parts always lubricated, and in the present case such flat spring is shaped of rectangular form and comprises a central slot 67 along a longitudinal edge 68 thereof and two slots 69 and 70 along the other longitudinal edge 71 thereof, which slots are offset with respect to the previous one and in which a respective central lamina 72 and 73 is provided, which is bent with respect to the plane of the correspondent flat spring and turned toward the ribs 51, 52 of the ribbed portion 48, in order to act resiliently thereagainst in a way to urge therefore steadily each flat spring against the associated friction pad elongated plate, thereby by keeping it always pushed with a sliding contact against the surface of the inner cavity 34 of the tubular housing 28.

By examining now the Figs. 11 and 12, shown therein are the diagrams of distribution of the braking forces respectively on a conventional shock absorber and a shock absorber according to the invention. By referring particularly to Fig. 11a, it is schematically shown a conventional cylindric shock absorber 74, comprising a cylindric rod 75 housed internally a cylindric box-like housing 76 and adapted to slide rectilinearly and reciprocatingly therein. In this case, the shock absorber is represented at the rest state thereof, wherein the washing machine drum is still and therefore the rod 75 does not exert braking actions and may be practically considered in a coaxial relationship to the box-like housing 76. In Fig. 11 b, on the contrary, in which is represented schematically the shock absorber at the operating state thereof, with the machine drum puts into movement, it is noted that the rod 75 tends to move reciprocatingly in the box-like housing 76 not only axially but also radially, thereby by arriving into contact with the inner surface of the same box-like housing, in this case on the zone marked with the reference numeral 77.

Under this operative state, then, the rod 75 operates eccentrically with respect to the box-like housing 76 and therefore exerts irregular braking actions against the inner surface of such box-like housing, namely which are greater at the contact zone thereof and progressively decreasing from such zone on toward the remaining parts of said inner surface, as represented by a set of force vectors 78 in Fig. 11 c.

By referring now to Fig. 12 a, it is shown schematically a shock absorber 26 according to the present invention, at a rest state thereof, in which it is noted that the rod 33 is housed coaxially inside the tubular housing 28 and does not exert braking actions thereon. On the contrary, in Fig. 12 b where the shock absorber is represented at the operating state thereof, in which such rod is always shifted radially thereby by sliding eccentrically inside the tubular housing 28, it is noted that in this case the rod friction pad arranges itself with the surfaces of its two adjacent sides 62 and 63 against the correspondent sides 45 and 46 of the tubular housing 28, at the contact zone 77 thereof, so that the reciprocating sliding of said friction pad into the tubular housing does not more exert, as previously, irregular braking actions against the inner surface of said tubular housing, rather it exerts steady and evenly distributed braking actions against such inner surface, thanks to the fact that the sides 62 and 63 of the friction pad are disposed always parallel to the opposite sides 45 and 46 of the tubular housing 28, both at the rest and operating state thereof, and therefore at this latter state in which the reciprocal rubbing of such sides at any contact position thereof is achieved, in correspondence of different eccentricities between the rod and the tubular housing, there are always produced braking actions having the same intensity on the same sides, which are represented schematically in Fig. 12 c by a set of force vectors 78 having the same intensity. In this way, the shock absorber according to the invention permits to obtain braking actions which are distributed almost evenly at any operative state of the washing machines, thanks to the fact that during the operation of these machines the friction pad is steadily and evenly kept pressed against the tubular housing, by the flat springs 65 and 66, which for this purpose are advantageously made of harmonic steel, and so shaped as to be adapted thoroughly to the outline of both the plates 59 of the friction pad and the ribs 51, 52 of the ribbed portion 48, thus providing on the one hand an effective and certain dampening of the mechanical stresses produced by the oscillations of the tub-drum unit during the drum movement, particularly at the high centrifugation speeds thereof, and on the other hand a reduced wear of such shock absorber and a longer life duration thereof.

In addition, each shock absorber of this kind is simple in its construction and formed by few component parts which can be assembled and disassembled rapidly and easily, which parts are made of metallic materials and therefore permit the heat produced by the reciprocal friction of the same parts to be well disposed of. Finally, the presence of the ribs of the shock absorber ribbed portions 47 and 48, which are longitudinal to and directed on the same direction of the mechanical stresses exerted by the washing unit on the machine base, permits the shock absorber to withstand effectively all the mechanical stresses of the washing unit, at both the rest and operative states thereof.

Another important advantage obtained by the use of the present shock absorber is that to ensure always an effective and steady lubrication of the different component parts of the same shock absorber, thanks to the fact to provide, on the inner surface of the respective elongated rectilinear casing 41 of the two half-shells 37 and 38 of the tubular housing 28, a plurality of recesses 79 and 80, respectively aligned and inclined to each other with opposite inclination directions with respect to the longitudinal extent of such elongated casing (Fig. 2 shows a recess 79 cuts along the line G-G).

In this way, before each shock absorber be assembled on a washing machine, some grease or other suitable lubricating material is introduced therein, which therefore collects and concentrates itself in the recesses 79 and 80 and then is steadily drawn by the friction pad therefrom, during its reciprocating sliding in the tubular housing 28, and distributed on all the shock absorber component parts, by passing through the through holes 64 of the plates of such friction pad and the recesses 67, 69 and 70 of the flat springs 65 and 66.

In addition, each so obtained shock absorber permits the air contained inside it to be effectively vented during the reciprocating stroke of the rod 33 in the tubular housing 28, thanks to the presence of a plurality of through holes 81 provided on the two half-shells 37 and 38 of said tubular housing, and foreseen in this case for the entire lenght of the respective central flat sides 44 of said half-shells. Finally, in accordance to the invention it is also possible to change the shape of the friction pad 56 and the tubular housing 28, by providing them with a polygonal form having a number of sides equal to each other and different to those previously described solely by way of example, provided that the sides of such pad and the tubular housing are always parallel and correspondent to each other at any washing machine operative state, and they can arrive always in contact together, by causing even and steady braking actions at any contact position between said friction pad and tubular housing.

## Claims

1. Shock absorber for washing machines, in particular household clothes washing machines, adapted to be fitted between the unit washing tub-drum and the lower base of the housing of these machines, in order to dampen the mechanical stresses produced during the drum rotation at its different washing and centrifugating speeds, the shock absorber being formed by at least a tubular housing and a rod insertable and slidable reciprocatingly into said tubular housing, provided with friction means co-operating with said tubular housing by friction action, so as to obtain braking actions adapted to dampen said mechanical stresses, the shock absorber being moreover characterized in that said tubular housing (28) and said friction means (56) of said rod (33) are made removable and provided, at their zones of reciprocal frictional contact, with outlines of polygonal shape having sides of number and form equal to each other, in a manner that the correspondent sides of said tubular housing (28) and said friction means (56) are coincident to each other at any operative state, either of rest or operating state, of the shock absorber, said friction means (56) being associated with resilient means (65, 66) adapted to keep them always into frictional contact with said tubular housing (28).

2. Shock absorber according to claim 1, characterized in that said tubular housing (28) comprises at least a first and a second separated metallic half-shell (37, 38), identical and symmetrical to each other, provided with rectilinear flattened edges (39, 40) adapted to be reciprocally adapted and joined in a per se known manner, thereby providing an inner cavity (34) for inserting and sliding said rod (33) therein, said first and second half-shell (39, 40) being each constituted by an elongated rectilinear casing (41) whose outline is of polygonal shape, having sides (44, 45, 46) with equal or different sizes, extended from an opened end portion (29) thereof, in which said rod (33) is inserted into said inner cavity (34), to a closed end portion (30) thereof adapted to be fixed to the washing machine.

3. Shock absorber according to claim 2, characterized in that said first and second half-shell (39, 40) are provided with a plurality of inner recesses (79, 80) for accomodating some grease or other suitable lubricating materials, and a plurality of through holes (81) for venting air contained inside them.

4. Shock absorber according to claim 3, characterized in that said rod (33) is preferably integrally made of molded plastic material and is constituted by a first and a second ribbed portion (47, 48), joined together and shaped with an outer outline identical and having sizes slightly lesser than those of said inner cavity (34), as well as provided with respective longitudinal rectilinear ribs (49, 50 ; 51, 52), delimited by plates (53, 54, 55) having the same outline of said inner cavity (34), the plate (53) of which is larger than said inner cavity (34) and the plates (54, 55) are slightly smaller than the same inner cavity, in order to be able to slide therein.

5. Shock absorber according to claim 4, characterized in that said friction means (56) comprise a friction pad made of adequate antifriction material, provided with a first and a second separated component part (60, 61) shaped like an elongated plate (59), each one of which is provided with sides (62, 63) coincident with those of said inner cavity (34) of said tubular housing (28) and co-operating by friction therewith, each plate (59) being housed externally against said second ribbed portion (48) of said rod (33), with the interposition of said resilient means (65, 66) and being provided with a plurality of through holes (64) into communication with said inner recesses (79, 80), for the passage of the grease or other suitable lubricating materials therebetween.

6. Shock absorber according to claim 5, characterized in that said resilient means comprise a first and a second metallic flat spring (65, 66) made of harmonic steel, which are so shaped as to be adapted to the outline of both the respective plates (59) and the correspondent ribs (51, 52) of said second ribbed portion (48), said first and second flat spring (65, 66) being provided with respective lamina (72, 73), bent with respect to the plane of the correspondent flat spring and turned toward said ribs (51, 52), in order to act resiliently thereagainst, and being also provided with slots (67, 69, 70) for the passage of grease or other suitable lubricating materials.

## Patentansprüche

1. Dämpfer für Waschmaschinen, insbesondere für Haushaltwäschewaschmaschinen, der geeignet ist zwischen der Wanne-Waschtrommel-Gruppe und dem Gehäuse-Untergestell dieser Maschine angebaut zu werden, um die durch Trommeldrehung auf ihre verschiedene Wasch- und Schleuderdrehzahlen verursachten mechanischen Beanspruchungen zu dämpfen, wobei der Dämpfer aus mindestens einem röhrenförmigen Gehäuse und einer Stange, die in diesem röhrenförmigen Gehäuse einsetzbar und mit Hin-und Herbewegung verschiebbar ist, besteht, wobei die Stange mit Reibungsmittel versehen ist, die mit dem röhrenförmigen Gehäuse durch Reibung zusammenwirken um die Dämpfungswirkungen, die geeignet sind solche mechanische Beanspruchungen zu dämpfen, zu verwirklichen, wobei der Dämpfer ist also dadurch gekennzeichnet dass dieses röhrenförmigen Gehäuse (28) und diese Reibungsmittel (56) der Stange (33) abnehmbar ausgeführt sind und bei ihrem Bereichen vom gegenseitigen Reibungskontakt mit polygonalförmigen Konturen versehen sind, deren Seitenzahl und -form aneinander gleich sind, derart dass die entsprechende Seiten dieses röhrenförmigen Gehäuses (28) und dieser Reibungsmittel (56) bei jeder beliebigen Betriebslage, entweder Ruhe- oder Arbeitslage, des Dämpfers, miteinander zusammentreffen, wobei diese Reibungsmittel (56) mit gefederten Mitteln ( 65, 66) zusammenwirken, die sie immer am Reibungskontakt gegen diesen röhrenförmigen Gehäuse (28) halten.

2. Dämpfer nach Anspruch 1, dadurch gekennzeichnet dass dieses röhrenförmigen Gehäuse (28) mindestens eine erste und eine zweite getrennte metallische Halbschale (37, 38) umfasst, die miteinander identisch und symmetrisch gebildet und mit geradlinigen flachen Kanten(39, 40) versehen sind, die geeignet sind in an sich bekannter Weise miteinander angepasst und verbunden zu werden, um einen inneren Hohlraum (34) zur Einsetzung und Gleitung dieser Stange (33) zu bestimmen, wobei diese erste und zweite Halbschale (39, 40) je durch einen verlängerten, mit polygonalförmigen Kontur mit Seiten (44, 45, 46) gleicher oder verschiedener Grösse versehenen geradlinigen Körper (41) gebildet sind, der von einem geöffneten Ende (29) wo diese Stange (33) nach innen dieses inneren Hohlraumes (34) eingeschoben ist, bis einem geschlossenen Ende (30), das geeignet ist an die Waschmaschine verbunden zu werden, sich estreckt.

3. Dämpfer nach Anspruch 2, dadurch gekennzeichnet dass diese erste und zweite Halbschale (39, 40) mit einer Mehrheit von inneren, das Schmierfett oder anderen geeigneten Schmiermittel aufnehmenden Aussparungen (79, 80) und einer Mehrheit von Durchgangslöchern (81) versehen sind, welche zur Entlüflung der an ihren Innerem enthaltenen Luft bestimmt sind.

4. Dämpfer nach Anspruch 3, dadurch gekennzeichnet dass diese Stange (33) vorzugsweise aus gespritztem Kunststoff einteilig hergestellt ist und durch einen ersten und einen zweiten gerippten Teil (47, 48) gebildet ist, die miteinander verbunden und mit einer identischen Aussenkontur und mit Abmessungen, die leicht kleinere als jene solches inneren Hohlraumes (34) sind, versehen sind, sowie die mit jeweiligen geradlinigen Längsrippen (49, 50 ; 51, 52) versehen sind, welche von mit derselben Kontur dieses inneren Hohlraums (34) gebildeten Platten (53, 54, 55) abgegrenzt sind, wobei die Platte (53) grösser als dieser inneren Hohlraum (34) ist, und die Platten (54, 55) leicht kleiner als derselber inneren Hohlraum (34) sind, um am Inneren dafür gleiten zu können.

5. Dämpfer nach Anspruch 4, dadurch gekennzeichnet dass solche Reibungsmittel (56) einen Reibungsbelag aus geeignetem Antifriktionsmaterial umfassen, der mit einem als eine verlängerte Platte ausgebildeten ersten und einem zweiten getrennten Bestandteil (60, 61) versehen ist, dessen jeder mit Seiten (62, 63), die mit denen von diesem inneren Hohlraum (34) solches röhrenförmigen Gehäuses (28) zusammenfallen und mit denselben durch Reibung zusammenwirken, versehen ist, wobei jede Platte (59) gegen diesen zweiten gerippten Teil (48) solcher Stange (33), mit der Zwischenschaltung solcher gefederten Mittel (65, 66) aussen gelagert ist, und mit einer Mehrheit von mit solchen inneren Aussparungen (79, 80) kommunizierenden Durchgangsbohrungen (64), die für den Durchgang von Schmierfett oder anderen geeigneten Schmiermittel bestimmt sind, versehen ist.

6. Dämpfer nach Anspruch 5, dadurch gekennzeichnet dass solche gefederte Mittel eine erste und eine zweite metallische Flachfeder (65, 66) aus Saitenstahl umfassen, die derart ausgebildet sind dass sie der Kontur der jeweiligen Platten (59) und der entsprechenden Rippen (51, 52) solches zweiten gerippten Teil (48) anpassbar sind, wobei diese erste und zweite Flachfeder (65, 66) mit entsprechenden Lamellen (72, 73) ausgerüstet sind, die gegenüber der Fläche der entsprechenden Flachfeder gefaltet und gegen solche Rippen (51, 52) gerichtet sind, um gegen diese auf federnde Weise einzuwirken, und auch mit zum Durchgang von Schmierfett oder anderen geeigneten Schmiermitteln bestimmten Einschnitten (67, 69, 70) ausgerüstet sind.

## Revendications

1. Amortisseur pour machines à laver, en particulier machines à laver le linge ménagères, apte à être monté entre le groupe cuve-tambour de lavage et la base inférieure de la carrosserie de ces machines, pour amortir les contraintes mécaniques produites pendant la rotation du tambour à ses différentes vitesses de lavage et de centrifugation, l'amortisseur étant constitué par au moins une enveloppe tubulaire et une tige insértable et coulissante alternativement dans ladite enveloppe tubulaire, pourvue de moyens de friction coopérants avec ladite enveloppe tubulaire par friction, afin de réaliser des actions de freinage aptes à amortir lesdites contraintes mécaniques, l'amortisseur étant en outre caractérisé en ce que ladite enveloppe tubulaire (28) et lesdits moyens de friction (56) de ladite tige (33) sont réalisés amovibles et dans leur zones de contact réciproque par friction sont pourvus de profiles en forme polygonale avec de côtés de nombre et forme égaux entre eux, de telle façon que les côtés correspondants de ladite enveloppe tubulaire (28) et desdites moyens de friction (56) coïncident entre eux dans n'importe quelle position opérative, de repos ou de travail, de l'amortisseur, lesdits moyens de friction (56) étant associés avec de moyens élastiques (65, 66) aptes à les maintenir toujours en contact frictionnel contre ladite enveloppe tubulaire (28).

2. Amortisseur suivant la revendication 1, caractérisé en ce que ladite enveloppe tubulaire (28) comprende au moins une première et une deuxième demi-coquille métallique séparée (37, 38), identiques et symétriques entre elles, pourvues de bords rectilignes aplatis (39, 40) aptes à être réciproquement ajustés et unis de façon connue en soi, en définant ainsi une cavité intérieure (34) pour l'introduction et le coulissement de ladite tige (33), lesdites première et deuxième demi-coquille (39, 40) étant constituées chacune par un corps rectiligne allongé (41) avec profil en forme polygonale, dont les côtés (44, 45, 46) sont de grandeurs égales ou différentes, s'étendent depuis une extrémité ouverte (29), dans laquelle ladite tige (33) est introduite dans ladite cavité intérieure (34) jusqu'une extrémité fermée (30) apte à être fixée à la machine à laver.

3. Amortisseur suivant la revendication 2, caractérisé en ce que lesdites première et deuxième demi-coquille (39, 40) sont pourvues d'une pluralité de rainures intérieures (79, 80) pour recevoir de la graisse ou d' autres adéquates substances lubrifiantes et d'une pluralité de trous débouchants (81) d'échappement de l'air contenue dans leur intérieur.

4. Amortisseur suivant la revendication 3, caractérisé en ce que ladite tige (33) est réalisée de préférence solidaire en matière plastique moulée et est constituée par une première et une deuxième part à nervures (47, 48), unies entre elles et façonnées avec un profil extérieur identique et avec des dimensions légèrement plus petites que celles de ladite cavité intérieure (34), ainsi que pourvues de respectives nervures rectilignes longitudinnelles (49, 50 ; 51, 52) délimitées par de plaques (53, 54, 55) ayant le même profil de ladite cavité intérieure (34), dont la plaque (53) est plus grande que ladite cavité intérieure (34) et les plaques (54, 55) sont légèrement plus petites que la même cavité intérieure, pour pouvoir glisser dans son intérieur.

5. Amortisseur suivant la revendication 4, caractérisé en ce que lesdits moyens de friction (56) comprennent un patin de friction en approprié matériel antifriction, pourvu d'une première et une deuxième partie composante séparée (60, 61) façonnées comme une plaquette allongée (59), dont chacune est pourvue de côtés (62, 63) coïncidents avec ceux de ladite cavité intérieure (34) de ladite enveloppe tubulaire (28) et co-opérant par friction avec les mêmes, chaque plaquette (59) étant logée à l'extérieur contre ladite part à nervures (48) de ladite tige (33), avec l'interposition desdits moyens élastiques (65, 66) et étant pourvue d'une pluralité de trous débouchants (64) communiquants avec lesdites rainures intérieures (79, 80) pour le passage de la graisse ou d'autres appropriées substances lubrifiantes.

6. Amortisseur suivant la revendication 5, caractérisé en ce que lesdits moyens élastiques comprennent un premier et un deuxième ressort métallique à lame (65, 66) en acier harmonique, façonnés de telle manière de s'ajuster au profil soit des respectives plaquettes (59) et soit des correspondantes nervures (51, 52) de ladite deuxième part à nervures (48), ledit premier et deuxième ressort à lame (65, 66) étant pourvus de respectives lames (72, 73) pliées par rapport au plan du correspondant ressort à lame et tournées envers lesdites nervures (51, 52) pour agir élastiquement contre les mêmes, et étant ainsi pourvus de gravures (67, 69, 70) pour le passage de la graisse ou d'autres appropriées substances lubrifiantes.
